# DEMANDE DE BREVET EUROPEEN

(11) **EP 2 009 582 A1**
(43) Date de publication de la demande: **31.12.2008**
(21) Numéro de dépôt: 07301182.7
(22) Date de dépôt: 29.06.2007
(51) Int. Cl.: G06K 19/077

(54) **Procédé pour une lecture optimisée de visas à transpondeurs radiofréquences, ensemble de visas adaptés et document les contenant**

(71) Demandeur: GEMPLUS, 13420 Gémenos (FR)
(72) Inventeur: Caruana, Jean-Paul, 13009 Marseille (FR)

(57) **Abrégé**

L'invention concerne un procédé pour la lecture de visas électroniques disposés dans un document, lesdits visas comportant chacun un support (24) portant une antenne reliée à un microcircuit, le document (A, B, C) comportant des feuilles d'un format déterminé articulées autour d'une charnière (22), les antennes étant dimensionnées à un format inférieur à celui d'une demi-feuille;
Le procédé se distingue en ce que les visas (V1a, V1b, V2a, V2b) sont disposés au maximum par deux sur une feuille de manière à voir les antennes (13i, 13j) espacées l'une de l'autre suivant un axe longitudinal (XF) de la feuille.

L'invention concerne également un ensemble de visas et le document contenant des visas.

## Description

Procédé pour une lecture optimisée de visas à transpondeurs radiofréquences, ensemble de visas adaptés et document les contenant.

L'invention concerne un procédé pour une lecture optimisée de visas électroniques à transpondeurs radiofréquences RF, un ensemble de visas à transpondeurs adaptés à cette lecture optimisée et un agencement de documents tels que des passeports agencés avec de tels visas.

Plus particulièrement, l'invention s'intéresse à une amélioration des communications avec un transpondeur susceptible d'être entouré de plusieurs transpondeurs. Cela se produit en particulier lorsque ces transpondeurs sont notamment fixés à un ensemble de feuilles d'un document.

Une application préférentielle de l'invention réside dans la lecture de documents de voyage électroniques de type sans-contact tels que passeports électroniques, les transpondeurs étant sous la forme de visas électroniques disposés ensemble dans le document. En particulier, ces documents et visas sont conformes aux spécifications de l'ICAO (acronyme de l'expression anglo-saxonne "International Civil Aviation Organization") et norme ISO/IEC 14443. Pour cette raison, on entendra dans la description indifféremment les termes "visa" ou "e-visa" comme pouvant comprendre ou être un transpondeur radiofréquence. De même, le terme "passeport" pourra indifféremment représenter tout document ou ensemble de feuilles, voire des structures support ou autre dispositif rassemblant un ensemble de transpondeurs.

Les documents de voyage tel que passeports électroniques et/ou visas électroniques comportent ou sont constitués d'une part d'un document papier sur lequel sont inscrites des informations concernant le porteur dudit document et d'autre part une puce électronique sans contact qui contient également de manière sécurisée des informations concernant ce même porteur.

Un problème non résolu survient dès lors que le document de voyage du type passeport électronique doit comporter également plusieurs visas électroniques.

En effet, du fait même des principes utilisés par ces puces électroniques sans contacts, l'augmentation du nombre de visas électroniques dans le document rend leur lecture simultanée de plus en plus difficile au fur et à mesure que leur nombre croit, allant même jusqu'à rendre impossible leur fonctionnement dès lors que ce nombre excède 4 ou 5 visas.

Le besoin exprimé au niveau des documents de voyage électroniques est que lesdits documents puissent contenir un maximum de visas électroniques sans contact qui fonctionnent simultanément lorsqu'ils sont soumis à un champ magnétique provenant d'un lecteur sans contact. Le lecteur et les documents de voyage devant être conformes à la norme ISO/IEC 14443.

Le cahier des charges du/des visas électroniques sans contact exige d'une part que chaque visa consomme et interagisse le plus faiblement possible avec le champ magnétique provenant du lecteur sans contact et d'autre part que chacun d'eux provoquent une variation dudit champ magnétique compatible avec les clauses imposées par le standard ISO/IEC 14443 lors de phases de réponses du visa vers le lecteur.

La technologie sans contact issue de la norme ISO/IEC 14443 décrit les mécanismes permettant de mettre en oeuvre des principes d'anticollisions entre produits sans contact. Ces principes proposent des mécanismes logiques permettant d'extraire un produit sans contact parmi plusieurs lorsqu'ils sont soumis au même champ magnétique. La condition nécessaire au bon fonctionnement de ces principes est que le lecteur alimente tous les produits présents dans le champ qu'il génère et qu'il les détecte tous.

En particulier, le mécanisme d'anticollision sans contact est limité par la consommation et la charge magnétique induite par la somme de plusieurs transpondeurs sans contact. Ceci limite le nombre de visas électroniques lisibles dans ou hors d'un passeport électronique.

Par ailleurs, le standard ISO/IEC 14443 contient une clause imposant que les produits sans contact fonctionnent dans une plage de champ magnétique compris entre 1,5 A/m et 7,5 A/m. Cette clause permet aux produits sans contact de fonctionner à partir d'un champ magnétique d'au moins 1,5 A/m.

Un lecteur conforme à la norme pourra donc ne générer qu'un champ de 1,5 A/m en présence du document de voyage tout en étant conforme à la norme. Le standard ISO/IEC 14443 impose également l'amplitude minimale de la réponse du produit sans contact pour que le lecteur puisse le détecter. Cette amplitude minimale vaut au moins 30/ H^{1,2}, (soit 18,6mV) avec H amplitude du champ magnétique. Cette valeur est définie à partir de l'amplitude des bandes latérales générée du fait de la modulation d'amplitude du champ magnétique lecteur, de fréquence 13,56 MHz par le produit sans contact, au rythme de sa sous porteuse cadencée à 847Khz.

Si ces conditions sont respectées, le lecteur sans contact conforme au standard devrait être en mesure de réceptionner les données de la puce sans contact.

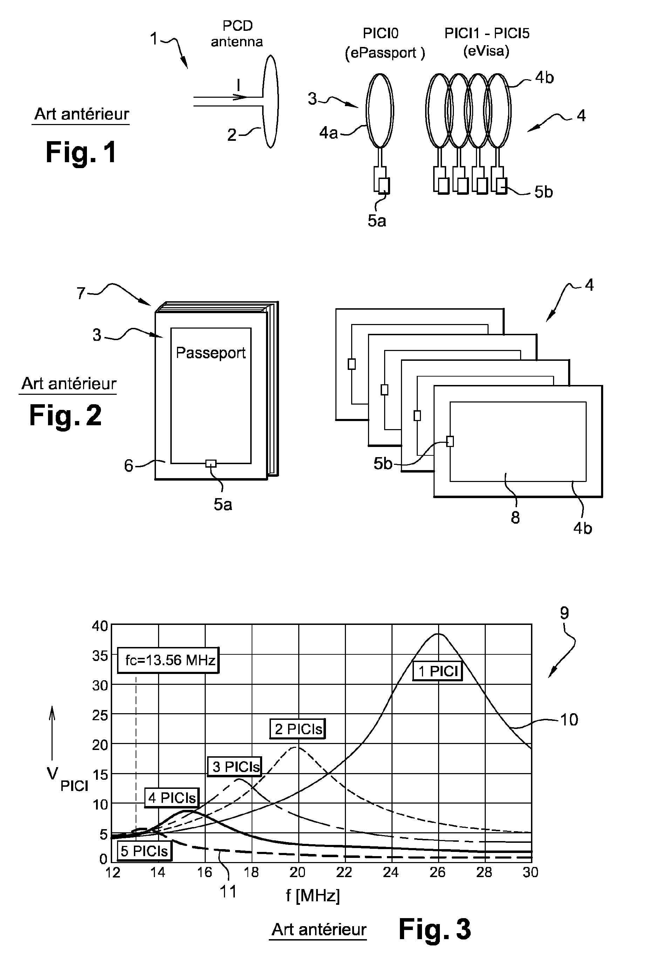

L'état de l'art actuel permet de respecter toutes ces conditions dès lors que l'on positionne un nombre maximum de quelques visas électroniques dans le document de voyage. Actuellement, 5 visas apparaissent comme un maximum au vu de la courbe de réponse des transpondeurs (figure 3 extraite du document officiel N1088 de l'ISO/IEC JTC1/SC17/WG8)

L'inventeur a observé que si l'on utilise plus de cinq produits sans contact individuellement conforme au standard, lorsqu'ils sont rassemblés dans un même document de voyage, du fait des couplages électromagnétiques entre eux, l'ensemble n'est plus conforme au standard ISO/IEC 14443. Le lecteur sans contact, conforme, n'est plus censé être capable ni de les alimenter ni de les détecter.

Cette limitation à cinq dans le nombre de transpondeurs a été considérée par l'inventeur comme pouvant constituer un inconvénient dans le développement du passeport électronique, mais aussi d'une manière générale pour la lecture de plusieurs transpondeurs disposés ensemble quelle que soit l'application envisagée.

L'inventeur s'est donc proposé d'améliorer en général la communication sans contact avec un nombre de transpondeurs pour une puissance constante du lecteur de manière à apporter par rapport à l'état de l'art, la garantie de service; c'est-à-dire qu'en raison d'une conception particulière des visas et d'un agencement particulier, il est possible de garantir la lecture des transpondeurs dans des conditions convenables.

Elle vise également à proposer une optimisation du nombre de transpondeurs lisibles ensemble pour l'application passeport électronique, conforme aux spécifications de l'ICAO en particulier l'ICAO 9303.et ISO/IEC14443 en particulier. De nouvelles caractéristiques de transpondeurs sont proposées à cet effet.

Pour cela, des hypothèses ou considérations ci-après à l'origine de l'invention furent émises par l'inventeur. Le passeport peut être ou non un passeport électronique conforme à l'ICAO (puce interne ou non); l'e-visa peut être collé sur une page du passeport recto, verso ou les deux; les fonctionnalités du passeport électronique ne doivent pas être modifiées par la présence des e-Visas.

Des contraintes suivantes de nature physique sont également prises en compte ci-après. L'interopérabilité des e-passeports doit être conservée avec l'infrastructure des lecteurs; chaque composant sans contact interagit l'un avec l'autre; chaque composant sans contact doit être alimenté; le lecteur doit pouvoir lire ou écouter chaque composant sans contact; ce lecteur doit résoudre les collisions.

Des contraintes de nature logique sont prises en compte ci-après. Le visa électronique (e-Visa) devra être différencié des passeports électroniques; L'application software "e-visa" peut être identique ou différente de celle d'un passeport;

Des contraintes du système sont également considérées, le lecteur devant rechercher la présence de l'e-visa.

Des contraintes relatives à des interactions entre composants sans contact sont prises en compte: l'Interaction entre des composants sans contact dépend du couplage mutuel entre chaque antenne (k), lui même dépendant du courant circulant dans l'antenne, de la distance entre antennes, du recouvrement des antennes, des dimensions de l'antenne, du nombre de spires;

L'Interaction entre le lecteur et les e-Visas dépend de l'antenne globale résultante des e-Visas, de l'accord entre le lecteur et l'antenne globale résultante des e-Visas;

Sont considérées, les plus importantes spécifications de ISO/IEC 14443 notamment pour la puissance du champ magnétique, interface du signal.

Pour résoudre des inconvénients et contraintes précédemment exposés, l'invention consiste notamment non seulement à réduire l'antenne des visas ou transpondeurs mais également leur recouvrement mutuel de manière à réduire considérablement leur sur-couplage; de ce fait, la réponse de la puce est améliorée et la gestion de l'anticollision en est facilitée.

Grâce à ces dispositions, l'invention permet de réduire fortement un phénomène identifié de sur-couplage recto/verso des visas sur une feuille voire de l'annuler dans la mesure où le chevauchement entre antennes disposées au recto et verso d'une feuille de document est éliminé. On évite ainsi du sur-couplage entre visas et/ou avec l'antenne du passeport électronique et on garantit ainsi la fonctionnalité du "e-visa"

L'invention a notamment pour avantage de minimiser les interférences de l'e-visa avec le passeport électronique qui contient aussi une antenne de communication; L'invention a pour avantage une facilité d'émission et de contrôle des "e-visas".

Selon un premier aspect, l'invention concerne un procédé pour la lecture de visas électroniques disposés dans un document, lesdits visas comportant chacun un support portant une antenne reliée à un microcircuit, le document comportant des feuilles d'un format déterminé articulées autour d'une charnière, les antennes étant dimensionnées à un format inférieur à celui d'une demi-feuille;
Le procédé se distingue en ce que les visas sont disposés au maximum par deux sur une feuille de manière à voir les antennes espacées l'une de l'autre suivant un axe longitudinal de la feuille.

Selon d'autres caractéristiques, les visas ayant un support d'un format légèrement inférieur ou égal à celui d'une feuille du document, le procédé comprend une étape selon laquelle on définit deux demi-parties du support de visa de part et d'autre d'un axe médian transversal et on positionne les antennes à l'intérieur d'une partie, toujours la même d'un visa à l'autre, puis on fixe les visas sur le recto et verso des feuilles, les visas étant agencés de manière identique par rapport au bord longitudinal libre de la feuille.

L'invention a également pour objet un ensemble de visas électroniques ou transpondeurs destinés à un document comportant plusieurs feuilles, lesdits visas comprenant un support ayant un format légèrement inférieur ou égal à celui d'une feuille du document et portant une antenne reliée à un microcircuit, le support de visa définissant deux demi-parties disposées de part et d'autre d'une médiatrice transversale;
L'ensemble de visas ou transpondeurs se distingue en ce que les antennes des visas sont toutes disposées dans une demi-partie située du même côté du support.

L'invention a également pour objet un document comportant plusieurs feuilles et des visas électroniques munis d'antenne agencés sur les feuilles, les antennes des visas étant dimensionnées de manière à être comprises dans la surface d'une demi-feuille;
Le document se distingue en ce que les visas sont disposés au maximum par deux sur une feuille de part et d'autre d'un axe médian transversal de la feuille de manière à avoir les antennes des visas espacées l'une de l'autre suivant un axe longitudinal de la feuille.

Selon d'autres caractéristiques, les visas ayant un support d'un format légèrement inférieur ou égal à celui d'une feuille du document et le support de visa définissant deux demi-parties de part et d'autre d'un axe médian transversal, alors le document se distingue en ce que le support comporte l'antenne à l'intérieur d'une partie, toujours la même d'un visa à l'autre et en ce que les visas sont fixés sur le recto et verso des feuilles en étant agencés de manière identique par rapport au bord longitudinal libre de la feuille

D'autres particularités et avantages de l'invention apparaîtront à la lecture de la description faite à titre d'exemple non limitatif et en regard des dessins annexés sur lesquels :
- La figure 1 illustre un système de lecture de passeport électronique selon l'art antérieur ;
- La figure 2 illustre un passeport électronique et les différents visas de l'art antérieur;
- La figure 3 illustre des courbes de tension de réponse en fonction du nombre de transpondeurs de l'art antérieur;
- La figure 4 illustre un agencement de transpondeurs ou e-visas sur une feuille de document et conforme à un premier mode de réalisation ou mise en oeuvre de l'invention;
- Les figures 5 et 6 illustrent un e-visa conforme à un second mode de réalisation vu respectivement en recto et verso;
- La figure 7 illustre deux variantes de documents adaptés au premier mode de réalisation de transpondeurs ou e-visas;
- Les figures 8 et 9 illustrent un document de voyage agencé avec deux e-visas conformes au second mode de réalisation respectivement sur une page recto et verso;
- La figure 10 illustre une antenne de transpondeur pour visa plus en détail avec des valeurs préférées de dimensionnement.

A la figure 1, un système de lecture 1 existant de passeports électroniques et de visas électroniques sous forme de transpondeurs de type radiofréquence (RF) comprend un lecteur apte à émettre un champ d'interrogation via une antenne émettrice 2 et à recueillir une réponse du transpondeur soumis à ce champ.

Le passeport 3 (PICI0) et chaque visa 4 (PICI1- PICI5) comportent le même type de transpondeur à savoir un circuit électronique (5a, 5b) de type RF-ID (identification radiofréquence) relié à une antenne (4a- 4b).

A la figure 2, le transpondeur du passeport est noyé dans la couverture 6 d'un passeport 7 et chaque transpondeur de visa électronique est noyé dans une feuille 8.

A la figure 3, un diagramme de courbes de réponse (10) en tension d'un transpondeur au format ID1 (format des passeport actuels) culmine au-delà de 35 Volts tandis que la réponse en tension de 5 transpondeurs PICI disposés ensemble avoisine 5 Volts. Au-delà de 5 transpondeurs la tension chute considérablement et il ne devient plus possible de détecter et lire plus de 5 transpondeurs à la fréquence de 13,56 MHz.

D'une manière générale, dans le cadre de la présente description, on entend par transpondeur dans le cadre de la description qui va suivre, tout circuit électronique d'identification utilisant une détection ou une communication à l'aide d'un champ électromagnétique. On s'intéresse plus particulièrement aux transpondeurs électromagnétiques comportant une bobine connectée à un condensateur ou à un circuit intégré ou à d'autres composants électroniques.

Les transpondeurs comprennent notamment un composant électronique tel qu'une puce de circuit intégré reliée à une antenne. Ils peuvent être insérés ou associés à tout type de support. Ils prennent par exemple la forme d'étiquettes électroniques adhésives, cartes sans contact; ils peuvent être noyés dans un emballage, une couverture de document, une feuille ou autre, etc.

Les transpondeurs sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

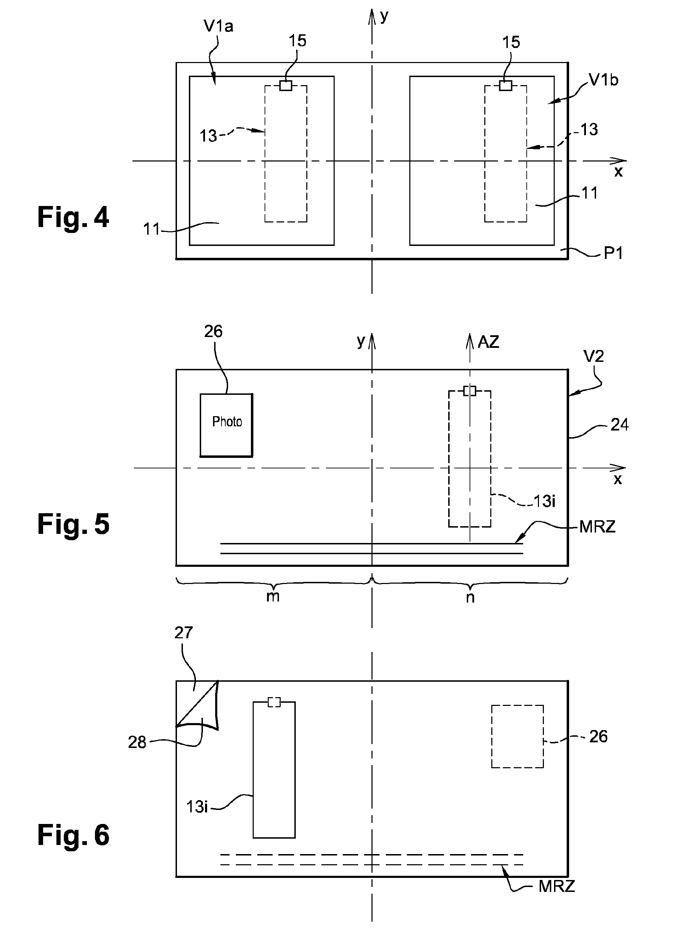

A la figure 4, on voit une étape de mise en oeuvre d'un mode d'exécution du procédé de l'invention pour la lecture optimisée de transpondeurs pouvant être sous forme de visas électroniques pour passeport ou accès divers. De cette optimisation de la lecture, découleront des structures et/ou agencements et/ou procédé de fabrication des transpondeurs et e-visas comme décrits ci-dessous.
Selon cette étape au maximum deux e-visas V1a et V1b sont disposés sur une page P1 d'un document (non représenté), tel un passeport dit document de voyage.
D'autres formes de documents ou support définitifs de transpondeurs ou étiquettes sont envisageables tels que des feuillets, lots de cartes, etc.

Selon une caractéristique du procédé, les visas électroniques V1a, V1b peuvent être les deux sur la même face de feuille P1 comme illustré mais peuvent être aussi disposés recto et verso de manière à avoir les antennes 13 espacées l'une de l'autre suivant un axe longitudinal X de la feuille ou de manière à avoir les antennes qui restent cantonnées de part et d'autre de l'axe médian ou médiatrice Y de la feuille.

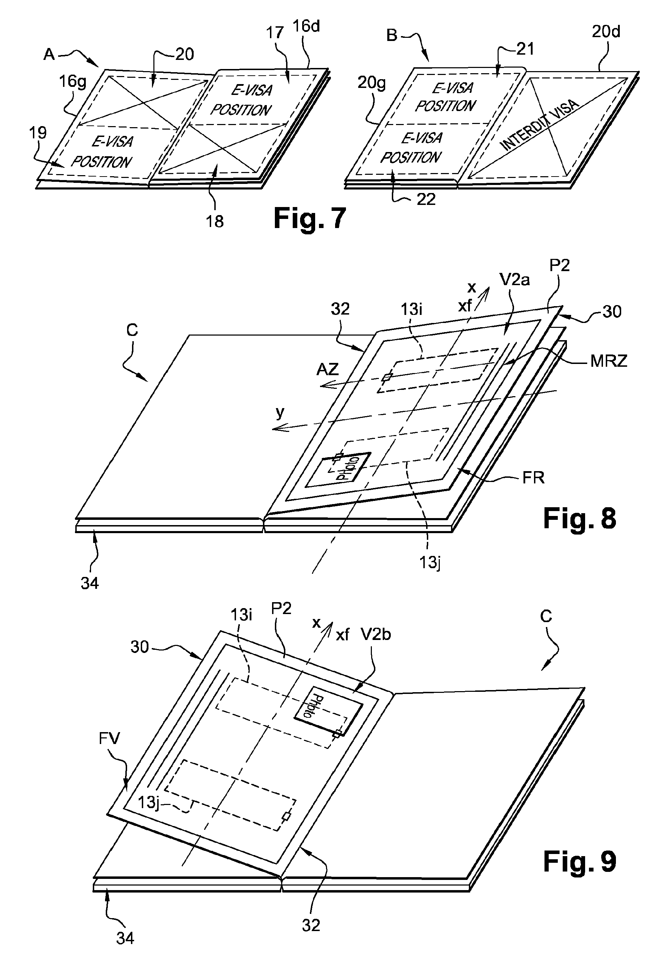

Les visas comportent chacun un support 11 avec une antenne 13 (schématisé dans les dessins par une seule spire pour des raisons de simplicité) reliée à un microcircuit 15; tandis que le document A, B, C (Figure 7) peut comporter plusieurs feuilles d'un format déterminé et articulées autour d'une charnière

Selon une caractéristique de l'invention les antennes 13 sont dimensionnées à un format inférieur à celui d'une demi-feuille du document. Ainsi, les antennes ne peuvent se chevaucher et engendrer un sur-couplage si les visas sont placés convenablement à leur endroit ou emplacement prédéterminé ou convenu à l'avance notamment comme indiqué sur figure 7.

Ainsi, selon une caractéristique de l'invention, un document type passeport comme celui de la figure 7 peut comporter plusieurs feuilles comme celle de la figure 4 et des visas électroniques disposés, notamment par collage, sur ces feuilles; les antennes des visas sont dimensionnées de manière à être comprises dans la surface de la demi-feuille (figure 4);
Conformément au mode de mise en oeuvre de l'invention, les visas sont disposés dans ce document au maximum par deux sur une feuille de manière à avoir les antennes espacées l'une de l'autre suivant un axe longitudinal X de la feuille. Deux variantes ci-après illustrent cette façon de procéder.

Sur cette figure 7, une variante de passeport prévoit, par exemple, par convention ou règlement administratif douanier des emplacements prédéterminés de visas de manière à en avoir deux au maximum répartis au recto et verso d'une feuille.

Sur la variante de document A, en haut de page de droite 16d se trouve un emplacement 17 prenant la demi-page, celui 18 situé en bas de page étant interdit. Des indications "Visa position" "Visa interdit ou une croix" peuvent rappeler au douanier le mode de répartition à respecter dans le passeport pour les visas. La page de gauche 16g, indique à contrario, un emplacement de visa en bas 19 et un emplacement 20 interdit en haut de la page, matérialisé par une croix. Cette disposition peut être reportée au verso de la page de droite 16d et ainsi de suite.

A la variante de document B, une face sur deux de chaque feuille est utilisée pour recevoir deux visas. En l'occurrence, chaque page de gauche 20g du document comprend, comme à la figure 4, deux emplacements 21, 22 de visas l'un au dessus de l'autre dans la page, chaque emplacement couvrant une demi-page environ.
Par contre les visas sont interdits sur la page de droite qui correspond au recto de la page de gauche 16g.

Sur le même principe, on peut prévoir des documents ayant déjà des emplacements prédéterminés de visa électronique qui tiennent compte du sur-couplage général de tous les transpondeurs présents ensemble dans le document ou du moins du sur-couplage entre des transpondeurs disposés sur des pages recto (droite) et pages verso (gauche) d'un document, puisqu'on évite de disposer les antennes à des emplacements se chevauchant selon leur projection sur un plan ou une page.

Aucun recouvrement pour n transpondeurs ne peut être obtenu si on répartit n surfaces d'antenne sur une surface de page. Pour 2n antennes du même format que précédemment, ces 2n antennes seront en recouvrement par projection une fois même en étant réparties sur plusieurs pages. Pour 2 antennes couvrant une page comme dans l'exemple, si on place 2 x 4 antennes dans le document, elles seront en recouvrement mutuel 4 fois pour tout le document fermé.
Le document étant ouvert et que l'on uniquement une face étant soumise au champ du lecteur, uniquement les transpondeurs situés sur cette page et derrière elle risque d'être en recouvrement ou sur-couplage.

A la figure 5, les visas électroniques V2 ont un support 24, qui peut être autocollant, d'un format plus grand que précédemment et légèrement inférieur ou égal à celui d'une feuille du document à accompagner (par exemple 5 à 30 % inférieur). Le format du support est par exemple le format ID1.

Selon une caractéristique de mise en oeuvre, le procédé comprend une étape de définition de deux demi-parties (m, n) du support de visa de part et d'autre d'un axe médian transversal Y et de positionnement des antennes à l'intérieur d'une partie, toujours la même d'un visa à l'autre. Dans l'exemple, cette partie (n) est à droite du visa comme sur la figure, une photo 26 pouvant être à gauche,

Le visa comporte ici l'antenne 13 fixée à l'arrière du support. Elle peut être réalisée par différentes techniques connues, telles que la gravure, le fil incrusté, la sérigraphie, le dépôt de matière conductrice, la broderie etc. L'antenne est sensiblement centrée sur la demi partie droite du support et en tout cas cantonnée dans la demi partie (n) du support en étant décalée par rapport à l'axe médian Y suivant l'axe x longitudinal;

Des informations notamment de type MRZ figurent en marge inférieure du support et sont orientées longitudinalement en marge inférieure du visa. Le MRZ constitue des données codées conformes aux recommandations de l'ICAO, lisibles par un lecteur optique et permettant de déduire un mot de passe pour accéder au microcircuit du passeport ou visa.

Sur le côté gauche se trouve une photo 26 du porteur. En outre, une feuille de couverture peut être ajoutée sur le support pour recevoir notamment des impressions et personnalisations graphique et/ou des éléments de sécurité.

Sur la figure 6, l'antenne est visible au verso et un film adhésif 27 peut être prévu par dessus avec film de protection amovible 28.

Pour cela, en utilisation, les visas de la figure 5, 6 sont fixés ou glissées sur le recto et/ou verso des feuilles (figures 8, 9) du document C. Les visas V2a, V2b sont agencés de manière identique par rapport au bord longitudinal libre 30 de la feuille (MRZ adjacent au bord longitudinal 30 libre de la page ou feuille P2 ou à l'opposé de la charnière 32 du document).

Ainsi, on parvient conformément à un autre mode de réalisation illustré aux figures 8 et 9, à un document C comme précédemment mais comportant cette fois des visas ayant un support d'un format légèrement inférieur ou égal à celui d'une feuille du document, le support de visa définissant deux demi-parties (m, n) de part et d'autre d'un axe médian transversal Y. Le document C comporte ici également une couverture 34; cette dernière peut comporter ou non elle même une antenne pour passeport électronique.
Et selon une caractéristique, le support comporte l'antenne à l'intérieur d'une partie (n), toujours la même d'un visa à l'autre. Dans l'exemple, à la figure 8, le visa V2a est fixé sur une page droite ou face recto FR d'une feuille P2 de document; le visa étant disposé de manière à avoir l'information notamment MRZ le long de la marge droite d'une page du document ou bord libre longitudinal 30.

De préférence, selon une caractéristique, l'antenne 13i du visa a un axe longitudinal AZ (dans le sens de sa plus grande longueur); et l'antenne est disposée dans le support 24 en ayant cet axe longitudinal AZ sensiblement parallèle à la médiatrice transversale Y du support ou sensiblement perpendiculaire à l'axe longitudinal médian X du support.

En position sur la feuille P2, l'antenne 13i est disposée dans le support en ayant l'axe de l'antenne AZ sensiblement perpendiculaire à un axe longitudinal de la feuille XF, lui-même parallèle ou colinéaire à celui du support.

Conformément à une caractéristique, les visas V2a, V2b sont fixés respectivement sur le recto et verso des feuilles du document et agencés de manière identique par rapport au bord longitudinal libre 30 de la feuille. Dans l'exemple, à la figure 9, un second visa V2b est disposé sur une page de gauche FV du document (verso) qui appartient à la même feuille P2 du document que précédemment et qui contient déjà un premier visa V2a derrière celle-ci ou page de droite (recto)

L'orientation du visa V2b s'effectue de manière à avoir l'antenne 13j de ce second visa décalée ou espacée de l'antenne 13i du premier V2a suivant l'axe longitudinal de la feuille XF ou axe longitudinal de support X. L'information MRZ du visa V2b se trouve disposée en marge ou à proximité du bord libre 30 de la feuille comme précédemment pour le visa V2a.

Ainsi, grâce à ce décalage on évite l'effet de sur couplage produit par l'une des deux antennes sur l'autre. Il n'y a pas d'erreur de positionnement de l'e-visa, le MRZ se trouvant toujours sur le bord libre ou externe longitudinale des feuilles.
Les antennes des visas se trouvent positionnées avec facilité du bon côté pour une meilleure lecture des visas.
Ces visas peuvent aussi bien convenir à des passeports comportant ou non une antenne, logée par exemple dans la couverture 34 du passeport ou une page interne.

Pour la fabrication, il est aisé de fabriquer un ensemble ou lot de Visas électroniques tous identiques dans leur structure ou configuration. Et en utilisation, des visas de cet ensemble (1, 2, 3, n) sont associés à un document de voyage comportant plusieurs feuilles ou du moins une feuille. Ces visas comprennent un support ayant un format légèrement inférieur ou égal à celui d'une feuille du document et portent chacun une antenne reliée à un microcircuit; le support de visa définit deux demi-parties (m, n) disposées de part et d'autre de sa médiatrice transversale Y.

Contrairement à l'art antérieur où les e-visas pouvaient être disposés de manière aléatoire dans le support, selon une caractéristique, les antennes des visas de cet ensemble sont tous disposées dans une demi-partie (n) du support située du même côté du support d'un visa à l'autre.
De préférence, l'antenne est disposée dans cette demi-partie (n) en ayant son axe longitudinal AZ sensiblement parallèle à la médiatrice transversale, ceci afin qu'une antenne de visa garde au mieux ses distances par rapport à un autre visa qui serait placé derrière lui (sur même ou autre feuille) et qui aurait ses constituants (MRZ, Photo...) orientés dans la même direction que lui. Ainsi, le risque de sur-couplage est encore plus réduit puisque l'espacement des antennes selon l'axe XF est plus important.

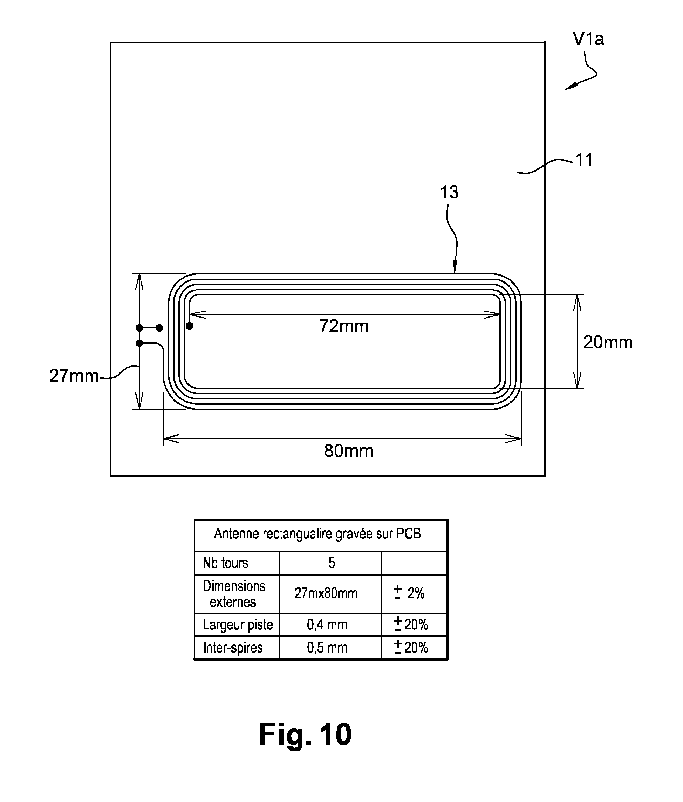

A la figure 10, un visa électronique (puce non représentée) V1a comprend un support 11 et comporte selon des caractéristiques de l'invention des particularités préférentielles pour bonne performance de communication. Selon ces caractéristiques préférées, le transpondeur peut comporter une antenne 13 ayant de 3 à 6 spires, de préférence 5 spires, ici réalisées par gravure; La surface à l'intérieur de la spire extérieure peut être comprise entre 17 x 65 et 37 x 95 mm, ici de préférence égale à environ de 27 x 80 mm; la largeur des spires peut être comprise entre 0,22 et 0, 58 mm, ici de préférence comprise entre 0,32 mm et 0, 48 mm; l'espace enter-spires peut être compris entre 0, 2 et 0, 8 mm, de préférence ici entre 0, 4 et 0, 6 mm.

Selon une disposition avantageuse, chaque visa électronique est disposé dans un support, par exemple une feuille sensiblement au format du document ou légèrement inférieur. Toutefois, dans l'application au passeport, le support est au format ID1 ou légèrement inférieur. L'important selon un mode préféré étant de ne pas laisser trop de choix à l'utilisateur lors de la fixation ou glissement du visa dans le document. Il est important que le débattement longitudinal du visa par rapport au bord de la feuille ou du support définitif) soit inférieur à l'écart de l'antenne avec l'axe Y du visa 24. Ainsi, même si fixe les visas dans une position tendant à rapprocher les antennes de l'axe médian transversal d'une feuille, il n'y aura pas de risque de recouvrement.

Ainsi, grâce à l'invention, il est possible de rendre possible l'application visa électronique avec un nombre de visas électroniques plus important que cinq visas. Les caractéristiques préférées exposées ci-dessus et figurant à la figure 10 ont permis de lire au moins 8 ou 10 transpondeurs conformément aux spécifications de l'ICAO.

## Revendications

**1.** Procédé pour la lecture de visas électroniques disposés dans un document, lesdits visas comportant chacun un support (24) portant une antenne reliée à un microcircuit, le document (A, B, C) comportant des feuilles d'un format déterminé articulées autour d'une charnière (22), les antennes étant dimensionnées à un format inférieur à celui d'une demi-feuille,
**caractérisé en ce que** les visas (V1a, V1b, V2a, V2b) sont disposés au maximum par deux sur une feuille de manière à voir les antennes (13i, 13j) espacées l'une de l'autre suivant un axe longitudinal (XF) de la feuille.

**2.** Procédé selon la revendication précédente, les visas ayant un support d'un format légèrement inférieur ou égal à celui d'une feuille du document, **caractérisé en ce que** :
- deux demi-parties (m, n) du support (24) de visa sont définies de part et d'autre d'un axe médian transversal (Y) et **en ce que** les antennes sont positionnées à l'intérieur d'une partie (n), toujours la même d'un visa à l'autre,
- on fixe les visas sur le recto et verso des feuilles (P2), les visas étant agencés de manière identique par rapport au bord longitudinal libre (30) de la feuille.

**3.** Procédé selon la revendication précédente, **caractérisé en ce que** les visas comportent des informations type MRZ disposées longitudinalement en marge du support chaque visa étant disposé de manière à avoir le MRZ à proximité du bord longitudinal libre (30) de la feuille du document.

**4.** Procédé selon l'une des revendications 2 à 3, l'antenne du visa ayant un axe longitudinal (AZ), **caractérisé en ce que** l'antenne est disposée dans le support en ayant son axe longitudinal (AZ) sensiblement parallèle à la médiatrice transversale (Y) du support et/ou de la feuille.

**5.** Ensemble de visas électroniques associés à un document comportant plusieurs feuilles, lesdits visas comprenant un support (24) ayant un format légèrement inférieur ou égal à celui d'une feuille (P2) du document et portant une antenne reliée à un microcircuit, le support de visa définissant deux demi-parties (m, n) disposées de part et d'autre d'une médiatrice transversale (Y),
**caractérisé en ce que** les antennes des visas sont toutes disposées dans une même demi-partie (n), située de même côté du support.

**6.** Ensemble de visas électroniques selon la revendication précédente, **caractérisé en ce que** l'antenne est disposée dans la demi-partie (n) en ayant son axe longitudinal (AZ) sensiblement parallèle à la médiatrice transversale (Y) du support.

**7.** Ensemble de visas électroniques selon l'une des revendications 5 ou 6, **caractérisé en ce que** :
- la surface à l'intérieur de la spire extérieure est environ de 27 x 80 mm,
- l'antenne comporte 5 spires,
- la largeur des spires est comprise entre 0,32 mm et 0, 48 mm
- L'espace enter-spires est compris entre 0, 4 et 0, 6 mm.

**9.** Document comportant plusieurs feuilles et des visas électroniques munis d'antenne sur les feuilles, les antennes des visas étant dimensionnées de manière à être comprises dans la surface d'une demi-feuille,
**caractérisé en ce que** les visas sont disposés au maximum par deux sur une feuille de part et d'autre d'un axe médian transversal (Y) de la feuille de manière à avoir les antennes (13) espacées l'une de l'autre suivant un axe longitudinal de la feuille.

**10.** Document selon la revendication précédente, les visas ayant un support d'un format légèrement inférieur ou égal à celui d'une feuille du document, le support de visa définissant deux demi-parties (m, n) de part et d'autre d'un axe médian transversal (Y),
**caractérisé en ce que** le support (24) comporte l'antenne à l'intérieur d'une partie (n), toujours la même d'un visa à l'autre,
- les visas (V2a, V2b) sont fixés sur le recto et verso des feuilles et agencés de manière identique par rapport au bord longitudinal libre (30) de la feuille (P2).
